# EUROPEAN PATENT APPLICATION

(11) **EP 4 708 529 A1**
(43) Date of publication of application: **11.03.2026**
(21) Application number: 24854343.1
(22) Date of filing: 25.07.2024
(51) Int. Cl.: H01M 50/333, H01M 50/211

(54) **BATTERY MODULE AND BATTERY PACK COMPRISING SAME**

(30) Priority: 11.08.2023 KR 20230105930
(71) Applicant: LG Energy Solution, Ltd., Seoul 07335 (KR)
(72) Inventor: AN, Seong Woo, Daejeon 34122 (KR); KWON, Hee Yong, Daejeon 34122 (KR); KIM, Seok Hee, Daejeon 34122 (KR); AHN, Kwan Hyeuk, Daejeon 34122 (KR); HER, Pill Jun, Daejeon 34122 (KR); PARK, Chan Seo, Daejeon 34122 (KR)
(74) Representative: Plasseraud IP
(86) International application number: PCT/KR2024/010854
(87) International publication number: WO 2025/037791

(57) **Abstract**

The present disclosure relates to a battery module and a battery pack including the same, and more specifically, to a battery module capable of uniformly discharging gases to the outside of the module case while confining flames inside the module case when flames and gases are generated inside the battery module case, and a battery pack including the same.

A battery module according to the present disclosure includes a battery cell, a module case accommodating a plurality of battery cells, and a module gas discharge unit that delays the discharge of flames among flames and gases generated inside the module case and discharges gases to the outside, wherein the module gas discharge unit includes check valves installed at each corner portion of the upper surface of the module case, thereby uniformly discharging gases inside the module case to the outside while confining flames inside the module case, which may prevent the propagation of fire to the surroundings.

## Description

### TECHNICAL FIELD

### CROSS-REFERENCE TO RELATED APPLICATIONS

The present application claims priority to Korean Patent Application No. 10-2023-0105930 filed on August 11, 2023 in the Republic of Korea, the disclosures of which are incorporated herein by reference.

### TECHNICAL FIELD

The present disclosure relates to a battery module and a battery pack including the same, and more specifically, to a battery module capable of uniformly discharging gases to the outside of the module case while confining flames inside the module case when flames and gases are generated inside the battery module case, and a battery pack including the same.

### BACKGROUND ART

A secondary battery (rechargeable battery) is a battery that can be charged and discharged, unlike a primary battery that cannot be recharged. A low-capacity secondary battery is used in small portable electronic devices such as mobile phones, laptop computers and camcorders, while a high-capacity battery is widely used as a power source for driving motors in hybrid vehicles or the like.

The secondary battery may be used in the form of a battery cell, and the battery cell may have a form in which a positive electrode, a separator and a negative electrode are sequentially laminated within an exterior material, and the inner space of the exterior material is filled with an electrolyte solution. A plurality of battery cells may be electrically connected to form a battery module, and a plurality of battery modules may be electrically connected to form a battery pack.

In the case of a battery pack including a plurality of battery modules therein in this way, it may be vulnerable to a thermal chain reaction between battery modules. For example, if a fire occurs inside any one battery module, the fire may be propagated to the surrounding battery modules. This fire propagation may lead to a thermal runaway phenomenon in which the battery modules inside the battery pack explode.

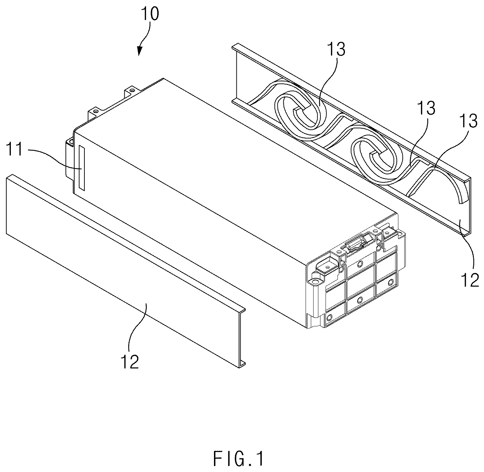

Conventionally, various attempts have been made to delay this thermal runaway phenomenon. FIG. 1 is a perspective view showing a conventional battery module, and shows that venting units are connected to both side surfaces of the battery module to delay the thermal runaway phenomenon.

Specifically, a conventional battery module 10 may include a module case in which a venting hole 11 for discharging flames (heat) to the outside in the event of a fire inside the module is formed. A venting unit 12 through which flames discharged from the venting hole 11 pass is attached to the module case, and a protruding path portion 13 may be formed in the venting unit 12. Here, flames inside the module case are discharged to the outside through the protruding path portion 13 formed in the venting unit 12, and thus the transmission of the flames to the surrounding battery modules 10 may be delayed.

However, the venting unit 12 is attached to one side and the other side of the battery module 10, respectively, and thus the flames discharged through the venting unit 12 may be directly transferred to other battery modules 10 disposed on both side surfaces of the battery module 10. In this case, the flame discharge of the battery module 10 is delayed, but there is a problem that the discharged flames are directly sprayed to the surrounding battery modules 10.

### SUMMARY

### TECHNICAL PROBLEM

The present disclosure is designed to solve the problems of the related art, and therefore the present disclosure is directed to providing a battery module capable of uniformly discharging gases to the outside of the module case while confining flames inside the module case when flames and gases are generated inside the battery module case, and a battery pack including the same.

### TECHNICAL SOLUTION

A battery module according to an embodiment of the present disclosure includes a battery cell; a module case accommodating a plurality of the battery cells; and a module gas discharge unit that delays the discharge of flames among flames and gases generated inside the module case and discharges gases to the outside, wherein the module gas discharge unit includes check valves installed at each corner portion of the upper surface of the module case.

A gas outlet for discharging gases to the check valve may be formed at each corner portion of the upper surface of the module case.

An installation groove portion in which the check valve is installed may be formed at each corner portion of the upper surface of the module case.

The check valve may be installed by being attached to each corner portion of the upper surface of the module case.

An adhesive layer may be formed between the installation groove portion and the check valve.

The check valve may be screw-coupled to the installation groove portion.

A clamping member for clamping the check valve installed in the installation groove portion may be installed at each corner portion of the upper surface of the module case.

The check valve may include a lower unit having an opening (hereinafter, a first opening) formed therein; an upper unit having an opening (hereinafter, a second opening) formed therein and provided above the lower unit; an intermediate member surrounding a portion of the lower unit and the upper unit between the lower unit and the upper unit; and a gas discharge member that is provided between the first opening and the second opening and opens the first opening only when the internal gas pressure of the module case is greater than a certain pressure.

The gas discharge member may include a spherical ball unit provided above the first opening and having a diameter longer than the diameter of the first opening; and a spring whose upper end portion is coupled to the lower end portion of the upper unit, wherein the ball unit may be coupled to the lower end portion of the spring and may move upward only when the gas pressure inside the module case is greater than a certain pressure.

The diameter of the spring may decrease from the top to the bottom.

The lower unit and the upper unit may be made of a metal material.

The lower unit and the upper unit may be made of SUS or aluminum.

Meanwhile, a battery pack according to an embodiment of the present disclosure includes a battery module; and a pack housing that accommodates a plurality of the battery modules.

The battery pack may further include a pack gas discharge unit that delays the discharge of flames among flames and gases generated inside the pack housing and discharges gases to the outside.

The pack gas discharge unit may include a check valve installed on at least one of one side surface and the other side surface of the pack housing.

### ADVANTAGEOUS EFFECTS

A battery module according to the present disclosure includes a battery cell, a module case accommodating a plurality of the battery cells, and a module gas discharge unit that delays the discharge of flames among flames and gases generated inside the module case and discharges gases to the outside, wherein the module gas discharge unit includes check valves installed at each corner portion of the upper surface of the module case, thereby uniformly discharging gases inside the module case to the outside while confining flames inside the module case, resulting in an advantageous effect of preventing the propagation of fire to the surroundings.

### BRIEF DESCRIPTION OF THE DRAWINGS

FIG. 1 is a perspective view showing a conventional battery module and a venting unit for delaying flame discharge within the battery module.
FIG. 2 is a perspective view showing a battery module according to the present disclosure.
FIG. 3 is a cross-sectional view taken along the Z-Z' direction of FIG. 2.
FIG. 4 is an enlarged view showing part A of FIG. 3.
FIG. 5a is a cross-sectional view showing a state in which an adhesive layer is formed between an installation groove portion and a check valve in a battery module according to the present disclosure.
FIG. 5b is a cross-sectional view showing a state in which a clamping member clamps a check valve in a battery module according to the present disclosure.
FIG. 6 is a perspective view showing a check valve mounted on a battery module according to the present disclosure.
FIG. 7 is a cross-sectional view showing a check valve mounted on a battery module according to the present disclosure.
FIG. 8 is a view showing a state in which gases are discharged through a check valve in a battery module according to the present disclosure.
FIG. 9 is a view showing a battery pack according to the present disclosure.
FIG. 10 is a view showing a state in which gases are discharged through a check valve in a battery pack according to the present disclosure.
FIG. 11 is an enlarged view showing part B of FIG. 10.

### DETAILED DESCRIPTION

Hereinafter, preferred embodiments of the present disclosure will be described in sufficient detail with reference to the accompanying drawings to enable those having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the present disclosure.

Additionally, it should be understood that the terms or words used in the present disclosure and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

Hereinafter, a battery module and a battery pack including the same according to the present disclosure will be described with reference to the drawings.

### BATTERY MODULE

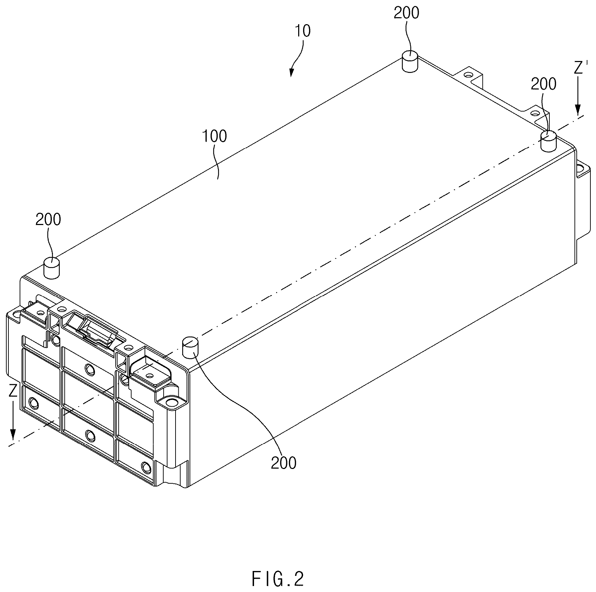

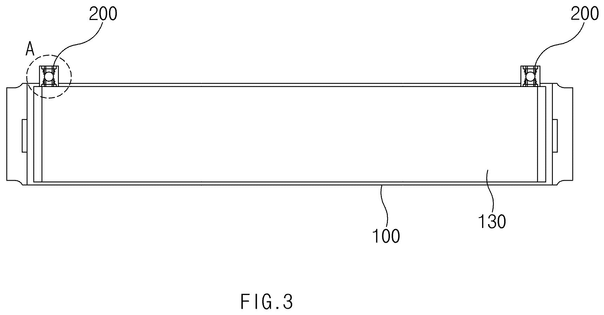

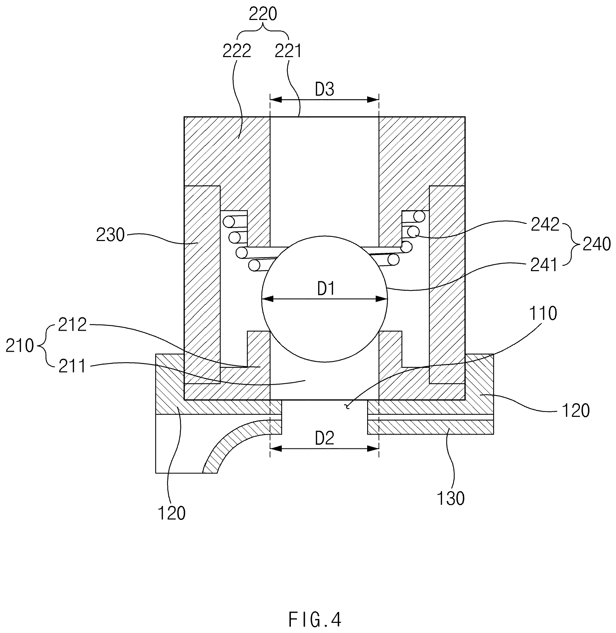

FIG. 2 is a perspective view showing a battery module according to the present disclosure, FIG. 3 is a cross-sectional view taken along the Z-Z' direction of FIG. 2, and FIG. 4 is an enlarged view showing part A of FIG. 3.

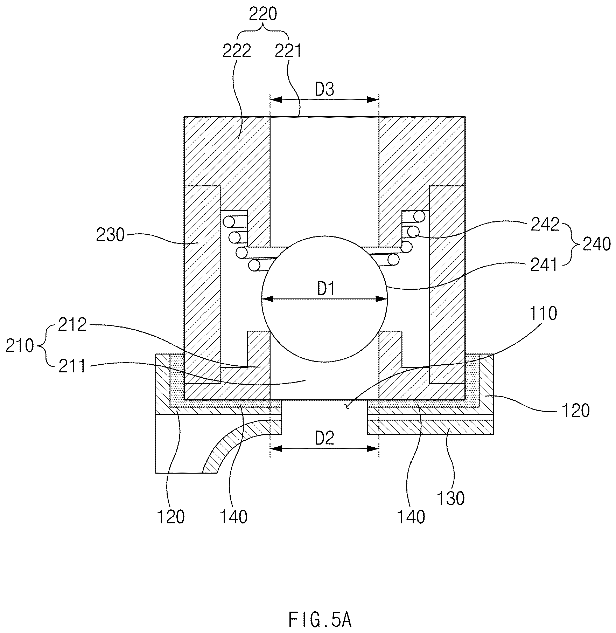

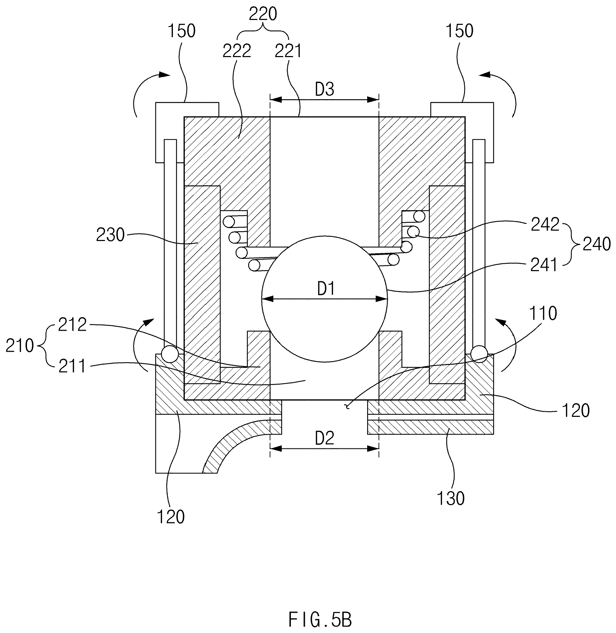

FIG. 5a is a cross-sectional view showing a state in which an adhesive layer is formed between an installation groove portion and a check valve in a battery module according to the present disclosure, and FIG. 5b is a cross-sectional view showing a state in which a clamping member clamps a check valve in a battery module according to the present disclosure.

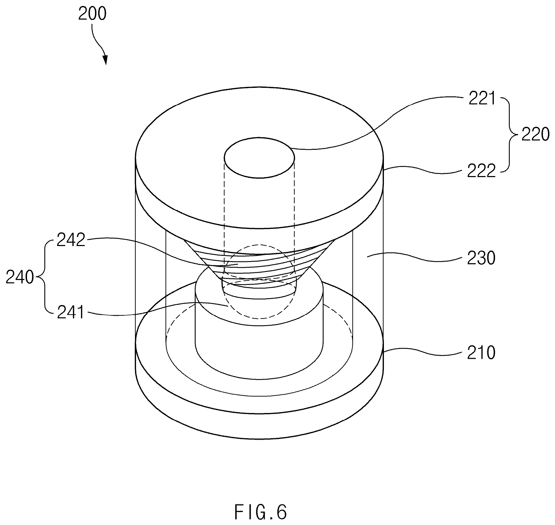

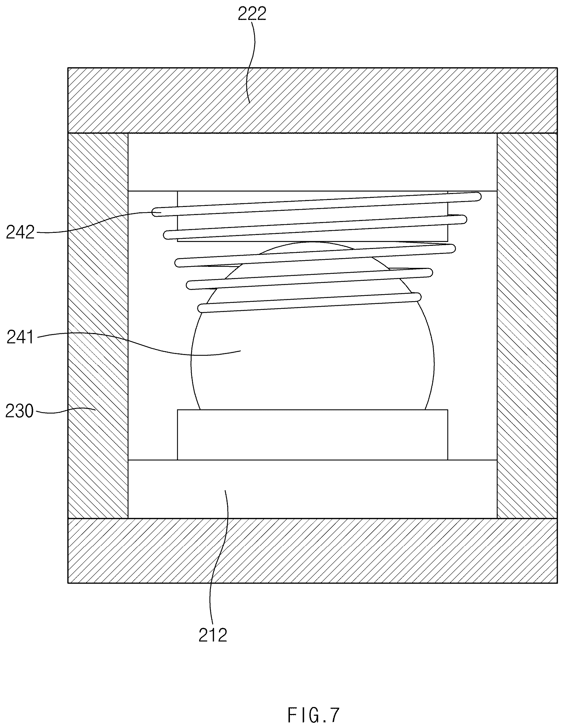

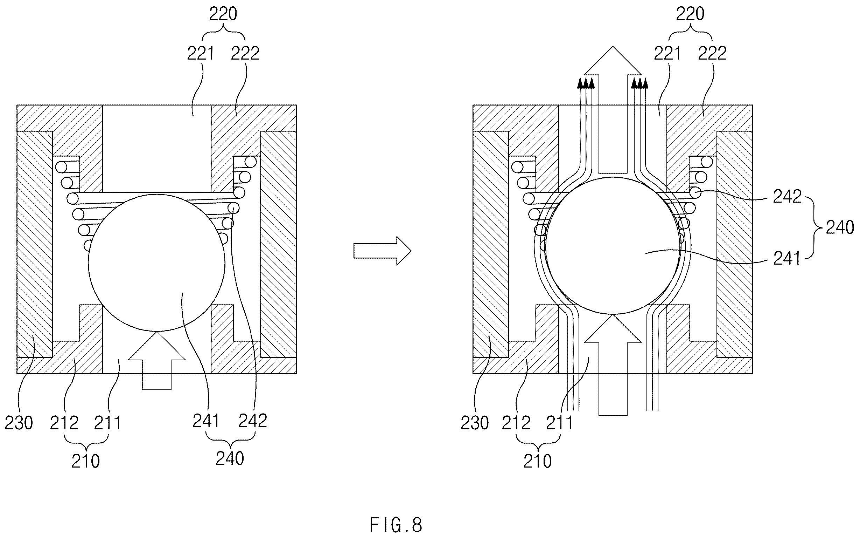

FIG. 6 is a perspective view showing a check valve mounted on a battery module according to the present disclosure, FIG. 7 is a cross-sectional view showing a check valve mounted on a battery module according to the present disclosure, and FIG. 8 is a view showing a state in which gases are discharged through a check valve in a battery module according to the present disclosure.

Referring to FIGS. 2 and 3, the battery module 10 according to the present disclosure includes a battery cell, a module case 100 accommodating a plurality of battery cells, and a module gas discharge unit that delays the discharge of flames among flames and gases generated inside the module case 100 and discharges gases to the outside, wherein the module gas discharge unit includes check valves 200 installed at each corner portion of the upper surface of the module case 100.

The battery cell is accommodated inside a case such as a pouch with a positive electrode, a negative electrode and a separator impregnated in an electrolyte solution, and may have various structures. For example, the battery cell may have a structure such as a stack cell in which unit cells are stacked in one direction or a jelly-roll in which a stack where a positive electrode, a negative electrode and a separator are alternately stacked is wound.

When a plurality of battery cells are electrically connected, a battery module 10 is formed, and the battery module 10 may include a module case 100 accommodating the battery cells. The module case 100 may have various structures and shapes, and as shown in FIG. 3, it may have a rectangular case structure including a cell loading portion 130 for loading battery cells therein.

Meanwhile, during the process of charging or discharging the battery cells inside the battery module 10, flames (heat) and gases may be generated inside the module case 100 due to a chemical reaction of the battery cells. When such gases accumulate inside the battery case 100, the battery case 100 may explode, and this may cause the flames inside the battery case 100 to be propagated to the surroundings, which may lead to a fire in the surrounding battery modules 10. To prevent this, a module gas discharge unit that discharges the internal gas to the outside may be formed in the battery case 100.

In particular, when flames inside the battery case 100 are discharged to the outside, the discharged flames are propagated to the surrounding battery modules 10 and promote fires in the surrounding battery modules 10, and thus it is important to delay the discharge of flames inside the battery case 100 as much as possible. Therefore, the module gas discharge unit should discharge the internal gas of the module case 100 to the outside and simultaneously suppress the internal flames of the module case 100 from being discharged to the outside.

The module gas discharge unit may include check valves 200 installed at each corner portion of the upper surface of the module case 100. The check valve 200 is a valve capable of discharging a fluid in one direction, and may discharge high-pressure gas inside the module case 100 to the outside. Specifically, the check valve 200 discharges only a high-pressure fluid to the outside, and thus the gas inside the module case 100 may pass through the check valve 200 in a high-pressure state, but the flames inside the module case 100 may pass through the check valve 200 to a very limited extent.

Therefore, since the battery module 10 according to the present disclosure includes the check valve 200 installed at each corner portion of the upper surface of the module case 100, high-pressure gas inside the module case 100 may be discharged to the outside of the battery module 10 and simultaneously the flames inside the module case 100 may be confined therein. Additionally, the check valve 200 is installed at every corner portion of the upper surface of the module case 100, so that high-pressure gas generated in all regions inside the module case 100 may be discharged to the outside, and a pressure difference inside the module case 100 may be removed to suppress the generation of heat flow from one side to the other inside the module case 100.

Moreover, if a long period of time passes after a fire breaks out in the battery module 10, there may be a case where the flames confined inside the battery module 10 are discharged to the outside through the check valve 200, and even in this case, the check valve 200 is formed on the upper surface of the battery case 100, so that the flames may be discharged upward from the battery module 10. Since the battery modules 10 are disposed in the left-right direction inside the battery pack, the flames discharged upward from the battery module 10 are not directly transmitted to the surrounding battery modules 10, and thus the propagation of the fire to the surrounding battery modules 10 may be suppressed as much as possible.

Meanwhile, as shown in FIG. 4, a gas outlet 110 for discharging the gas to the check valve 200 may be formed at each corner portion of the upper surface of the module case 100. The gas outlet 110 may be formed at a position corresponding to the opening formed on the upper side of the cell loading portion 130 described above. In this case, gases and flames generated by the chemical reaction of the battery cells may flow into the lower portion of the check valve 200 through the opening formed on the upper side of the cell loading portion 130 and the gas outlet 110.

An installation groove portion 120 in which the check valve 200 is installed may be formed at each corner portion of the upper surface of the module case 100. In this case, the lower region of the check valve 200 is fitted into the installation groove portion 120, and thus the check valve 200 may be firmly coupled to the module case 100. When high-pressure gas is discharged to the outside of the battery module 10, the high-pressure gas should pass through the check valve 200, and thus an instantaneous pressure may be transmitted to the check valve 200 in a direction where the high-pressure gas passes (upward direction). Since the check valve 200 is fitted into the installation groove portion 120 to be firmly fixedly coupled to the upper surface of the module case 100, the check valve 200 may be prevented from deviating even when the check valve 200 is subjected to upward pressure by the high-pressure gas.

Additionally, the check valve 200 may be installed by being attached to each corner portion of the upper surface of the module case 100. In this case, the check valve 200 is attached to the upper surface of the module case 100, and thus the check valve 200 may be prevented from deviating even when the check valve 200 is subjected to upward pressure by the high-pressure gas.

Additionally, the check valve 200 may be installed by being attached to the installation groove portion 120. Specifically, as shown in FIG. 5a, an adhesive layer 140 may be formed between the upper surface of the installation groove portion 120 and the check valve 200 to improve the coupling force between the installation groove portion 120 and the check valve 200. In this case, the check valve 200 is fitted into the installation groove portion 120 and simultaneously attached to the adhesive layer 140 formed on the upper surface of the installation groove portion 120, and thus the check valve 200 may be prevented from deviating even when the check valve 200 is subjected to upward pressure by the high-pressure gas.

Additionally, the check valve 200 may be screw-coupled to the installation groove portion 120. Specifically, screw threads may be formed on the outer peripheral surface of the lower region of the check valve 200 and the inner peripheral surface of the installation groove portion 120, and the check valve 200 may be screw-coupled to the installation groove portion 120. In this case, since the check valve 200 is firmly coupled to the installation groove portion 120, the check valve 200 may be prevented from deviating even when the check valve 200 is subjected to upward pressure by the high-pressure gas.

Additionally, as shown in FIG. 5b, a clamping member 150 for clamping the check valve 200 installed in the installation groove portion 120 may be installed at each corner portion of the upper surface of the module case 100. The clamping member 150 may rotate and move according to the rotation of the motor installed at the upper end portion of the installation groove portion 120 to clamp the upper end portion of the check valve 200 fitted into the installation groove portion 120. In this case, the check valve 200 is clamped by the clamping member 150 while being firmly coupled to the installation groove portion 120, and thus the check valve 200 may be prevented from deviating even when the check valve 200 is subjected to upward pressure by the high-pressure gas.

Meanwhile, as shown in FIGS. 6 and 7, the check valve 200 may include a lower unit 210 having a first opening 211 formed therein, an upper unit 220 having a second opening 221 formed therein and provided above the lower unit 210, an intermediate member 230 surrounding a portion of the lower unit 210 and the upper unit 220 between the lower unit 210 and the upper unit 220, and a gas discharge member 240 that is provided between the first opening 211 and the second opening 221 and opens the first opening 211 only when the internal gas pressure of the module case 100 is greater than a certain pressure.

The lower unit 210 may include a lower body 212 in which a step is formed and the cross-sectional area thereof decreases toward the upper side. A first opening 211 through which the gas discharged from the inside of the module case 100 passes is formed in the lower body 212, and a gas discharge member 240 may be formed on the upper side of the first opening 211. The gas discharge member 240 normally blocks the upper surface of the first opening 211, but when the gas passing through the first opening 211 exceeds a certain pressure, the gas discharge member 240 may move upward. When the gas discharge member 240 moves upward, the first opening 211 is opened, and the gas may pass through the opened first opening 211.

The gas discharge member 240 may include a spherical ball unit 241 provided above the first opening 211 and having a diameter longer than the diameter of the first opening 211, and a spring 242 whose upper end portion is coupled to the lower end portion of the upper unit 220. In this case, the ball unit 241 provided above the first opening 211 may be coupled to the lower end portion of the spring 242 in various ways. For example, the ball unit 241 may have a groove portion formed into which the lower end portion of the spring 242 is fitted, so that the ball unit 241 and the spring 242 may be fitted into each other. Additionally, the ball unit 241 may be attached to the lower end portion of the spring 242 by an adhesive or the like.

The upper end portion of the spring 242 is coupled to the lower end portion of the upper body 222, and the spring 242 and the upper body 222 may be coupled in various ways. For example, the upper end portion of the spring 242 may be fitted into the lower end portion of the upper body 222, and the upper end portion of the spring 242 may be attached to the outer peripheral surface of the lower end portion of the upper body 222 by an adhesive or the like.

The diameter D1 of the ball unit 241 may be formed to be longer than the diameter D2 of the first opening 211, and the diameter D1 of the ball unit 241 may be formed to be longer than the diameter D3 of the second opening 221. In this case, the ball unit 241 provided between the first opening 211 and the second opening 221 may be prevented from deviating to the lower portion of the first opening 211 or the upper portion of the second opening 221.

Additionally, the distance between the end of the upper end portion of the lower body 212 and the end of the lower end portion of the upper body 222 may be shorter than the diameter of the ball unit 241. That is, since the diameter of the ball unit 241 provided in the region between the first opening 211 and the second opening 212 is longer than the height of the empty space formed between the upper end portion of the lower body 212 and the lower end portion of the upper body 211, the ball unit 241 may be prevented from deviating in the left-right direction even when it is separated from the lower end portion of the spring 242.

Meanwhile, the ball unit 241 coupled to the lower end portion of the spring 242 may move upward only when the internal gas pressure of the module case 100 is greater than a certain pressure. Specifically, as shown in FIG. 8, the gas inside the module case 100 may pass through the gas outlet 110 and then press the ball unit 241 blocking the first opening 211 upwardly.

Here, since the ball unit 241 is coupled to the lower end portion of the spring 242, the ball unit 241 may move upward by contracting the spring 242 only when the pressure of the gas pressing the ball unit 241 upward is greater than a certain value. In this case, the gas pressing the ball unit 241 upward may pass through the second opening 221 through the gap created between the first opening 211 and the ball unit 241 and then be discharged to the outside.

Afterwards, when the gas is sufficiently discharged to the outside and the pressure of the gas pressing the ball unit 241 upward is less than a certain value, the contracted spring 242 expands again, and thus the ball unit 241 may move downward and block the first opening 211. In this case, the first opening 211 is blocked, and thus the gas inside the module case 100 cannot pass through the first opening 211.

Additionally, the diameter of the spring 242 coupled to the lower end portion of the upper unit 220 may decrease from the top to the bottom. Specifically, the upper end portion of the spring 242 is coupled to the outer peripheral surface of the lower end portion of the upper body 222, and the lower end portion of the spring 242 is coupled to the ball unit 241, and since the diameter of the lower end portion of the spring 242 coupled to the ball unit 241 is the smallest, the ball unit 241 may not pass through the spring 242 to move upward even when pressure is transmitted upward to the ball unit 241.

Meanwhile, the lower unit 210 and the upper unit 220 may be made of a metal material. In particular, the lower unit 210 and the upper unit 220 may be made of SUS or aluminum. The gas under high temperature and high pressure inside the module case 100 is discharged to the outside by passing through the first opening 211 formed in the lower unit 210 and the second opening 222 formed in the upper unit 220, and when the lower unit 210 and the upper unit 220 are made of a material that is weak to heat and pressure, the lower unit 210 and the upper unit 220 may be melted or deformed by heat, thereby forming holes through which flames are discharged in the lower unit 210 and the upper unit 220. Therefore, when the lower unit 210 and the upper unit 220 are made of a metal material, it is possible to prevent the formation of holes in the lower unit 210 and the upper unit 220 by the gas under high temperature and high pressure, thereby confining the flames inside the module case 100 for a long period of time.

The intermediate member 230 may also be made of a metal material, just like the lower unit 210 and the upper unit 220. In this way, when the intermediate member 230 is made of a metal material, it is possible to prevent the intermediate member 230 from being deformed by heat transmitted to the intermediate member 230 through the lower unit 210 and the upper unit 220. Meanwhile, the intermediate member 230 may be made of various types of metal materials. For example, the intermediate member 230 may be made of SUS or aluminum.

The ball unit 241 and the spring 242 of the gas discharge member 240 may each be made of a metal material. In this case, it is possible to prevent the ball unit 241 and the spring 241 from being deformed by the gas under high temperature and high pressure passing through the ball unit 241 and the spring 242. Meanwhile, the ball unit 241 and the spring 242 may be made of various metal materials. The ball unit 241 may be made of SUS or aluminum, and the spring 242 may be made of SUS, aluminum, or carbon steel.

### BATTERY PACK

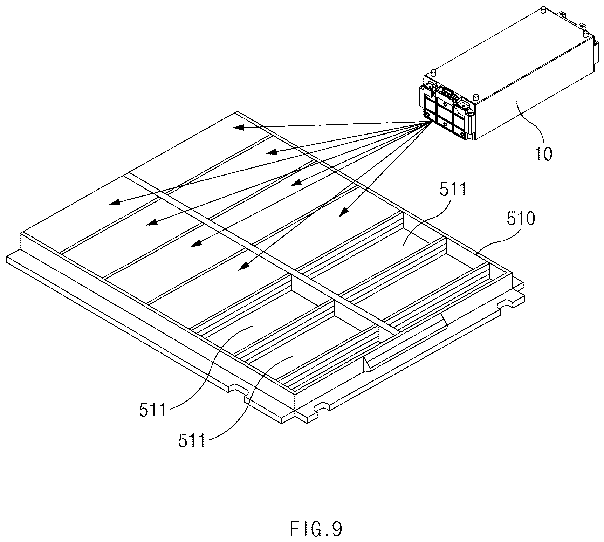

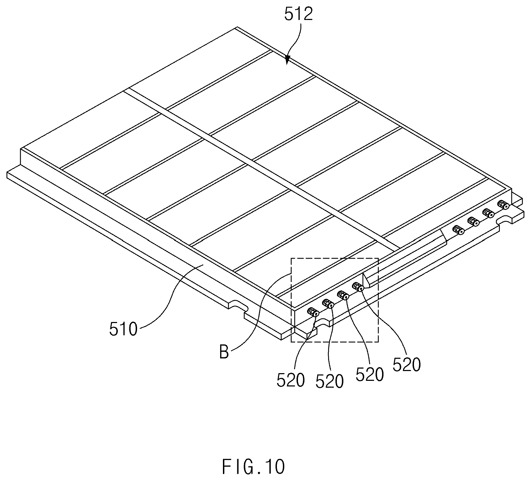

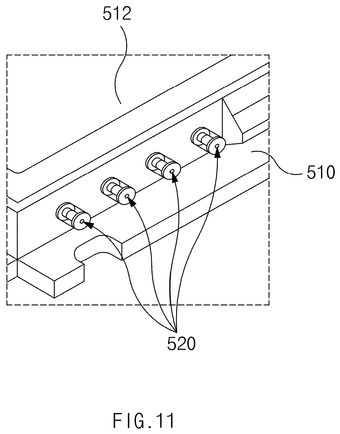

FIG. 9 is a view showing a battery pack according to the present disclosure, FIG. 10 is a view showing a state in which gases are discharged through a check valve in a battery pack according to the present disclosure, and FIG. 11 is an enlarged view showing part B of FIG. 10.

Referring to FIGS. 9 to 11, a battery pack 500 according to the present disclosure includes a battery module 10 and a pack housing 510 that accommodates a plurality of battery modules 10. Here, the pack housing 510 is a frame with an open upper end portion and may be made of various materials. For example, the pack housing 510 may be a SUS-based or aluminum-based metal frame that has high thermal conductivity, is easy to process, and may secure sufficient rigidity.

Meanwhile, a plurality of module loading portions 511 on which a plurality of battery modules 10 are loaded may be formed on the lower surface of the pack housing 510. Each of the module loading portions 511 is formed to correspond to the size of the battery module 10, and the module loading portions 511 may be configured in a plurality of rows on the pack housing 510. In this case, the plurality of battery modules 10 loaded on the module loading portions 511 may be electrically connected.

Additionally, an upper cover 512 may be coupled to the open upper surface of the pack housing 510. The pack housing 510 and the upper cover 512 may be coupled in various ways. For example, the upper cover 512 may be welded to a wall portion of the pack housing 512 that extends upward from the lower surface of the pack housing 510. Additionally, the upper cover 512 may be screw-coupled to the wall portion of the pack housing 512.

Meanwhile, the battery pack 500 according to the present disclosure may further include a pack gas discharge unit that delays the discharge of flames among flames and gases generated inside the pack housing 510 and discharges gases to the outside. Here, the pack gas discharge unit may include a check valve 520 installed on at least one of one side surface and the other side surface of the pack housing 510.

The check valve 520 is a valve capable of discharging a fluid in one direction, and may have substantially the same structure as the check valve 200 of the module case 100 described above. The check valve 520 of the pack gas discharge unit and the check valve 200 of the module gas discharge unit are installed on one side surface and/or the other side surface of the pack housing 510 and are installed at a corner portion of the upper surface of the module case 100, respectively, so that the check valve 520 of the pack gas discharge unit and the check valve 200 of the module gas discharge unit may have substantially the same internal structure with only a difference in the installation position.

Meanwhile, the gas discharged from the inside of the module case 100 through the check valve 200 of the module gas discharge unit may move to one side surface and/or the other side surface of the pack housing 510 through the space between the upper surface of the module case 100 and the upper cover 512 of the pack housing 510. Here, the gas moved to one side surface and/or the other side surface of the pack housing 510 may be discharged to the outside through the check valve 520 of the pack gas discharge unit only when the pressure thereof is greater than a predetermined value.

Even in this case, the check valve 520 of the pack gas discharge unit discharges only a high-pressure fluid to the outside, and thus the gas inside the battery pack 500 may pass through the check valve 520 of the pack gas discharge unit in a high-pressure state, but the flames inside the battery pack 500 may pass through the check valve 520 of the pack gas discharge unit to a very limited extent.

Therefore, since the battery pack 500 according to the present disclosure includes the check valve 520 installed on at least one of one side surface and the other side surface of the pack housing 510, high-pressure gas inside the pack housing 510 may be discharged to the outside of the battery pack 500 and simultaneously the flames inside the pack housing 510 may be confined therein. Additionally, since the check valve 520 is installed on one side surface and/or the other side surface of the pack housing 510, the gas inside the pack housing 510 may be discharged in the left-right direction (width direction) of the pack housing 510.

At this time, the upper cover 512 is coupled to the upper portion of the pack housing 510, and thus the gas discharged to the outside through the check valve 520 does not pass through the upper cover 512. In this case, the gas may be discharged while minimizing upward pressure applied to the upper cover 512, thereby preventing the coupling force between the upper cover 512 and the pack housing 510 from weakening as the gas is discharged.

Meanwhile, the check valve 520 may be installed by being attached to one side surface and/or the other side surface of the pack housing 510. In this case, the check valve 520 is attached to the pack housing 510, and thus the check valve 520 may be prevented from deviating even when the check valve 520 is subjected to pressure in one side and/or the other side direction by the high-pressure gas.

Meanwhile, an installation groove portion in which a check valve 520 is installed may be formed on one side surface and/or the other side surface of the pack housing 510. In this case, a portion of the check valve 520 is fitted into the installation groove portion, and thus the check valve 520 may be firmly coupled to the pack housing 510.

Additionally, the check valve 520 may be installed by being attached to the installation groove portion. An adhesive layer may be formed between the installation groove portion and the check valve 520 to improve coupling force. In this case, the check valve 520 is fitted into the installation groove portion and simultaneously attached to the adhesive layer formed on the installation groove portion, and thus the check valve 520 may be prevented from deviating even when the check valve 520 is subjected to pressure in one side and/or the other side direction by the high-pressure gas.

Additionally, the check valve 520 may be screw-coupled to the installation groove portion. Specifically, screw threads may be formed on the outer peripheral surface of the check valve 520 and the inner peripheral surface of the installation groove portion, and the check valve 520 may be screw-coupled to the installation groove portion. In this case, since the check valve 520 is firmly coupled to the installation groove portion, the check valve 520 may be prevented from deviating even when the check valve 520 is subjected to pressure in one side and/or the other side direction by the high-pressure gas.

Additionally, a clamping member for clamping the check valve 520 installed in the installation groove portion may be installed on one side surface and/or the other side surface of the pack housing 510. The clamping member may rotate and move according to the rotation of the motor to clamp the check valve 520 fitted into the installation groove portion. In this case, the check valve 520 is clamped by the clamping member while being firmly coupled to the installation groove portion, and thus the check valve 520 may be prevented from deviating even when the check valve 520 is subjected to pressure in one side and/or the other side direction by the high-pressure gas.

Meanwhile, the battery pack 500 according to the present disclosure may include other components in addition to the battery module 10, the check valve 520, and the pack housing 510. For example, the battery pack 500 according to the present disclosure may further include components of the battery pack 500 known at the time of filing of the present disclosure, such as a battery management system (BMS), a busbar, a relay, a current sensor, a temperature sensor, or the like.

The present disclosure has been hereinabove described with regard to a limited number of embodiments and drawings, but the present disclosure is not limited thereto and may be embodied in different forms by those having ordinary skill in the technical field pertaining to the present disclosure within the technical aspect of the present disclosure and the scope of the appended claims and their equivalents.

### [List of Reference Numerals]

| | | | |
|---|---|---|---|
| 10: | Battery module | 11: | Venting hole |
| 12: | Venting unit | 13: | Protruding path portion |
| 100: | Module case | 110: | Gas outlet |
| 120: | Installation groove portion | 130: | Cell loading portion |
| 140: | Adhesive layer | 150: | Clamping member |
| 200: | Check valve | 210: | Lower unit |
| 211: | First opening | 212: | Lower body |
| 220: | Upper unit | 221: | Second opening |
| 222: | Upper body | 230: | Intermediate member |
| 240: | Gas discharge member | 241: | Ball unit |
| 242: | Spring | 500: | Battery pack |
| 510: | Pack housing | 511: | Module loading portion |
| 512: | Upper cover | 520: | Check valve |

## Claims

1. A battery module comprising:
a battery cell;
a module case accommodating a plurality of the battery cells; and
a module gas discharge unit that delays the discharge of flames among flames and gases generated inside the module case and discharges gases to the outside,
wherein the module gas discharge unit comprises check valves installed at each corner portion of an upper surface of the module case.

2. The battery module according to claim 1,
wherein a gas outlet for discharging gases to the check valve is formed at each corner portion of the upper surface of the module case.

3. The battery module according to claim 1,
wherein an installation groove portion in which the check valve is installed is formed at each corner portion of the upper surface of the module case.

4. The battery module according to claim 1,
wherein the check valve is installed by being attached to each corner portion of the upper surface of the module case.

5. The battery module according to claim 3,
wherein an adhesive layer is formed between the installation groove portion and the check valve.

6. The battery module according to claim 3,
wherein the check valve is screw-coupled to the installation groove portion.

7. The battery module according to claim 3,
wherein a clamping member for clamping the check valve installed in the installation groove portion is installed at each corner portion of the upper surface of the module case.

8. The battery module according to claim 1,
wherein the check valve comprises:
a lower unit having an opening (hereinafter, a first opening) formed therein;
an upper unit having an opening (hereinafter, a second opening) formed therein and provided above the lower unit;
an intermediate member surrounding a portion of the lower unit and the upper unit between the lower unit and the upper unit; and
a gas discharge member that is provided between the first opening and the second opening and opens the first opening only when the internal gas pressure of the module case is greater than a certain pressure.

9. The battery module according to claim 8,
wherein the gas discharge member comprises:
a spherical ball unit provided above the first opening and having a diameter longer than a diameter of the first opening; and
a spring whose upper end portion is coupled to a lower end portion of the upper unit,
wherein the ball unit is coupled to a lower end portion of the spring and moves upward only when the gas pressure inside the module case is greater than the certain pressure.

10. The battery module according to claim 9,
wherein a diameter of the spring decreases from the top to the bottom.

11. The battery module according to claim 8,
wherein the lower unit and the upper unit are made of a metal material.

12. The battery module according to claim 11,
wherein the lower unit and the upper unit are made of SUS or aluminum.

13. A battery pack comprising a battery module according to any one of claims 1 to 12; and a pack housing that accommodates a plurality of the battery modules.

14. The battery pack according to claim 13, further comprising:
a pack gas discharge unit that delays the discharge of flames among flames and gases generated inside the pack housing and discharges gases to the outside.

15. The battery pack according to claim 14,
wherein the pack gas discharge unit comprises a check valve installed on at least one of one side surface and the other side surface of the pack housing.
